# EUROPÄISCHE PATENTSCHRIFT

(11) **EP 2 078 961 B1**
(45) Veröffentlichungstag und Bekanntmachung des Hinweises auf die Patenterteilung: **08.04.2020**
(21) Anmeldenummer: 08021741.7
(22) Anmeldetag: 15.12.2008
(51) Int. Cl.: G01N 35/00, B25J 9/00

(54) **Vorrichtung zum Manipulieren von Laborproben**
Device for manipulating laboratory samples
Dispositif de manipulation d'échantillons de laboratoire

(30) Priorität: 08.01.2008 CH 212008
(43) Veröffentlichungstag der Anmeldung: 15.07.2009
(73) Patentinhaber: LICONIC AG, 9493 Mauren (LI)
(72) Erfinder: Malin, Cosmas G., 9493 Mauren (LI)
(74) Vertreter: Sutter, Kurt

(56) Entgegenhaltungen:
- EP-A2- 0 441 060
- WO-A2-02/055199
- CH-A5- 684 214
- DE-A1- 3 322 142
- DE-A1- 4 138 689
- DE-A1- 4 210 963
- US-A1- 2003 215 364
- US-A1- 2007 189 926
- US-B1- 6 435 582

## Beschreibung

Die Erfindung betrifft eine Vorrichtung zum Manipulieren von Laborproben mit einem Greifer oder einer Ausstossvorrichtung.

Zur Manipulation von Laborproben, insbesondere von Behältern für Flüssigkeiten, wie z.B. Reagensgläsern und kleinen Flaschen, werden in Labors oftmals automatisierte Vorrichtungen verwendet. Diese besitzen z.B. einen Greifer, der von oben über eine Probe gefahren werden kann und mehrere, um eine Achse angeordnete Finger aufweist. Die Finger werden seitlich gegen die Laborprobe gedrückt um diese zu erfassen. Der Greifer kann die Probe sodann an einen gewünschten Ort transportieren und dort absetzen oder andere Manipulationen mit der Probe durchführen.

Um die Finger des Greifers zu bewegen, ist ein Antriebsmechanismus vorhanden. Beispielsweise ist eine drehbare Platte vorgesehen, in welcher eine Spiralnut vorgesehen ist, in der die Finger geführt sind. Durch Drehen der Platte können die Finger radial zur Achse bewegt werden.

CH 684 214 beschreibt eine Vorrichtung dieser Art mit einer einzigen Greifhand.

US 6 435 582 beschreibt eine Vorrichtung dieser Art gemäss Oberbegriff von Anspruch 1.

In einem ersten Aspekt der Erfindung stellt sich die Aufgabe, eine Vorrichtung dieser Art mit mechanisch einfachem Aufbau bereitzustellen und welche dazu geeignet ist, Proben unterschiedlicher Grösse zu manipulieren.

Diese Aufgabe wird von der Vorrichtung gemäss Anspruch 1 erfüllt. Demgemäss sind die Finger radial zur Achse federnd auslenkbar. Dies erlaubt es, in einfacher Weise eine Spreiz- oder Kontraktionsbewegung durchzuführen, indem der Antriebsmechanismus die Finger gegen die federnde Kraft bewegt.

Anspruchsgemäss weist der Greifer mindestens zwei Greiferhände auf, welche Finger für unterschiedliche Greifdurchmesser zum Ergreifen von Laborproben mit unterschiedlichen Probedurchmessern aufweisen, und wobei die Greiferhände an einem gemeinsamen Träger angeordnet sind.

In einer vorteilhaften Ausführung besitzt der Antriebsmechanismus ein Betätigungsorgan, welches konzentrisch zur Achse angeordnet ist und mittels einem Betätigungsantrieb entlang der Achse verfahren werden kann. Es ist mit den Fingern so verbunden, dass seine achsiale Bewegung in eine radiale Bewegung der Finger umgesetzt wird. Hierzu kann z.B. jeder Finger eine geneigt zur Achse verlaufende Anlauffläche aufweisen, welche in Kontakt mit dem Betätigungsorgan steht, und welche eine Art Keil bildet, der von der Bewegung des Betätigungsorgans radial gedrückt oder gezogen wird.

Besonders geeignet zur Halterung der Finger sind Blattfedern, da sie es erlauben, die Finger radial federnd zu halten aber tangential und achsial präzis zu führen.

In einer bevorzugten Ausführung ist jeder Finger an mindestens zwei parallelen, beabstandet zueinander angeordneten Blattfedern befestigt. Diese bilden eine Art Parallelogrammführung, welche ein Verkippen des Fingers relativ zur Achse verhindert, so dass er immer plan an der Laborprobe anliegt.

In einem zweiten bevorzugten Aspekt der Erfindung stellt sich die Aufgabe, eine Vorrichtung der eingangs genannten Art mit kompaktem Aufbau bereitzustellen.

Diese Aufgabe wird von der Vorrichtung gemäss Anspruch 14 gelöst. Demgemäss ist ein Tisch vorgesehen, welcher zur Aufnahme der Laborproben bestimmt ist und auf den der Greifer zugreifen kann. Der Tisch ist in einer ersten horizontalen Richtung X verschiebbar. Weiter ist der Greifer in eine zweite horizontale Richtung Y verschiebbar. Dadurch wird es möglich, jeden Lagerplatz einer zweidimensionalen Lagermatrix auf dem Tisch zuzugreifen. Indem die Verschiebungen in Richtung X und Y örtlich getrennt werden (erstere greift am Tisch an, letztere am Greifer), kann ein kompakter, stabiler Aufbau realisiert werden, der mit einem konventionellen X-Y-Tisch nicht möglich wäre.

In einem dritten bevorzugten Aspekt der Erfindung ist das Problem zu lösen, dass beim Aufnehmen oder Absetzen von Proben die Probe selbst oder benachbarte Proben nicht richtig abgesetzt und/oder versehentlich aufgenommen werden, z.B. weil sie an den Fingern kleben bleiben.

Dieses Problem wird gelöst, indem der Greifer mindestens eine in einer Richtung parallel zur Achse komprimierbare Feder aufweist, welche dazu geeignet ist, beim Aufnehmen einer Laborprobe achsial gegen die Laborprobe und/oder gegen zur aufzunehmenden Laborprobe benachbarte Laborproben zu drücken.

In einem weiteren bevorzugten Aspekt der Erfindung stellt sich die Aufgabe, eine Vorrichtung der eingangs genannten Art bereitzustellen, welche es erlaubt, Proben von einem ersten Probenhalter in einen zweiten Probenhalter zu transferieren.

Diese Aufgabe wird durch eine Vorrichtung gelöst, welche folgende Merkmale aufweist:
- Eine stationäre Basis.
- Einen Tisch, der an der stationären Basis angeordnet ist und in horizontaler Richtung X gegenüber dieser bewegt werden kann.
- Einen oberen Probenhalter und einen unteren Probenhalter, welche am Tisch angeordnet sind und somit vorzugsweise gemeinsam in Richtung X verfahren werden können. Jeder Probenhalter besitzt eine Anordnung von Lagerpositionen zur Aufnahme der Proben. Der obere Probenhalter ist höher als der untere Probenhalter angeordnet.
- Einen Lift, der ebenfalls an der Basis angeordnet ist und einen vertikal verfahrbaren Wagen aufweist.
- Eine Ausstossvorrichtung mit einem Stössel, die am Wagen angeordnet und in horizontaler Richtung Y verfahrbar ist.
- Ein unterhalb und beabstandet vom Stössel angeordnetes Probezwischenlager, welches in vertikaler Richtung Z zwischen dem oberen und dem unteren Probenhalter angeordnet ist und in Richtung Y zwangsgeführt mit der Ausstossvorrichtung gekoppelt ist. Somit befindet sich das Probezwischenlager also immer auf gleicher Höhe, aber auch immer vertikal unterhalb des Stössels.

Diese Komponenten sind so ausgestaltet, dass mit dem Stössel eine Probe von oben aus einer Lagerposition im oberen Probenhalter in das Probezwischenlager gestossen werden kann, sowie vom Probezwischenlager in eine andere Lagerposition des unteren Probenhalters.

Weitere bevorzugte Ausführungen und Anwendungen ergeben sich aus der folgenden Beschreibung anhand der Figuren. Dabei zeigen:
Fig. 1 eine Ansicht einer Ausführung einer Vorrichtung zum Manipulieren von Laborproben,
Fig. 2 eine Ansicht der Vorrichtung von Fig. 1 aus einer anderen Richtung, leicht von unten,
Fig. 3 eine Ansicht des Greifers der Vorrichtung von Fig. 1,
Fig. 4 eine Draufsicht auf den Greifer von Fig. 3,
Fig. 5 eine Seitenansicht des Greifers von Fig. 3,
Fig. 6 eine Seitenansicht des Greifers und eines Teils seiner Halterung in gekippter Stellung,
Fig. 7 eine weitere Ansicht der Anordnung von Fig. 6,
Fig. 8 eine Greifhand mit Rückhaltefedern für benachbarte Proben,
Fig. 9 eine Greifhand mit Ausstossfeder für die aufgenommene Probe,
Fig. 10 eine weitere Ausführung der Vorrichtung zum Manipulieren von Laborproben,
Fig. 11 eine zweite Ansicht der Vorrichtung nach Fig. 10,
Fig. 12 ein Detail der Vorrichtung von Fig. 10,
Fig. 13 eine Seitenansicht des Stössels mit Rückhaltefedern,
Fig. 14 eine weitere Ausführung der Vorrichtung,
Fig. 15 einen Greifer mit einer alternativen Ausführung des Probendetektors und
Fig. 16 eine Ausführung mit drei Greifhänden.

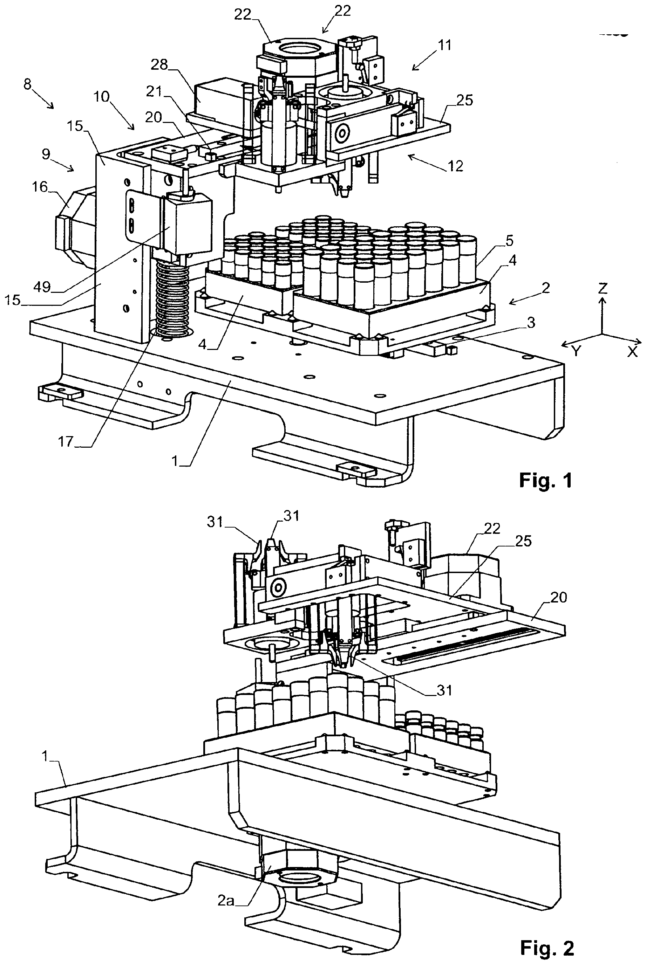

Die in Fig. 1 und 2 gezeigte Vorrichtung zum Manipulieren von Laborproben besitzt eine stationäre Basis 1, die einen Tisch 2 trägt. Der Tisch 2 ist mit einem Antrieb 2a (siehe Fig. 2) entlang einer Schiene 3 in einer horizontalen Richtung X verfahrbar und trägt im vorliegenden Ausführungsbeispiel zwei Probenhalter 4. Die Probenhalter 4 sind vorzugsweise standardisierte Bauteile, wie sie im Laborbereich zur Aufnahme einer Vielzahl von Laborproben 5 eingesetzt werden. Die Laborproben 5 stehen in Vertiefungen der Probenhalter 4. Jeder Probenhalter 4 besitzt eine zweidimensionale Matrix entsprechender Vertiefungen.

Auf der Basis 1 ist weiter eine Manipulationsvorrichtung 8 angeordnet. Deren wichtigste Teile sind ein auf der Basis positionierter Lift 9, der einen in vertikaler Richtung Z verfahrbaren Wagen 10 trägt. Der Wagen 10 trägt seinerseits einen in horizontaler Richtung Y senkrecht zu X und Z verfahrbaren Halter 11, an welchem ein Greifer 12 um die Richtung X schwenkbar angeordnet ist. Diese einzelnen Teile werden im Folgenden im Detail beschrieben.

Der Lift 9 umfasst einen Turm 15, der mit der Basis 1 fest verbunden ist. Am Turm 15 ist eine Schiene befestigt (nicht gezeigt), in welcher der Wagen 10 entlang Richtung Z läuft. Zum Antrieb des Wagens 10 ist am Turm 15 ein Liftantrieb 16 vorgesehen, welcher ein Ritzel antreibt, das den Wagen 10 über eine Zahnstange treibt. Eine Druckfeder 17 nimmt einen Teil des Gewichts des Wagens 10 auf und reduziert so die Belastung des Liftantriebs 16.

Der Wagen 10 besitzt einen horizontalen Arm 20, an welchem eine Führung 21 vorgesehen ist, entlang der der Halter 11 entlang Richtung Y verfahrbar ist. Zum Antrieb des Halters 11 ist ein Horizontalantrieb 22 vorgesehen.

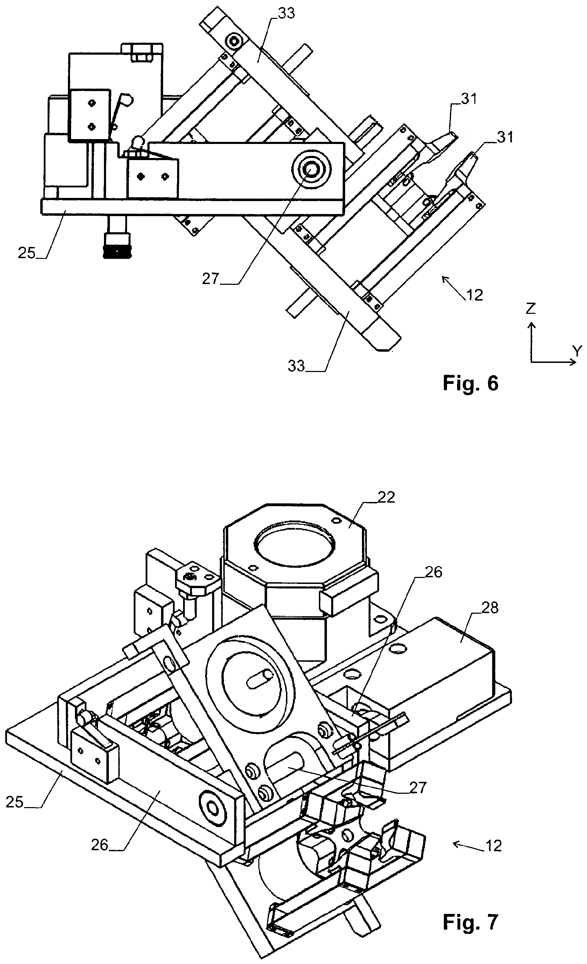

Der Halter 11, der insbesondere in Fig. 6 und 7 gut ersichtlich ist, besitzt eine horizontale Platte 25, an welcher zwei Lagerelemente 26 angeordnet sind. Diese tragen eine sich in Richtung X erstreckende Schwenkachse 27, welche mit einem am Halter 11 angeordneten Schwenkantrieb 28 verschwenkt werden kann. Der eigentliche Greifer 12 ist fest mit der Schwenkachse 27 verbunden und kann so um 180° verschwenkt werden.

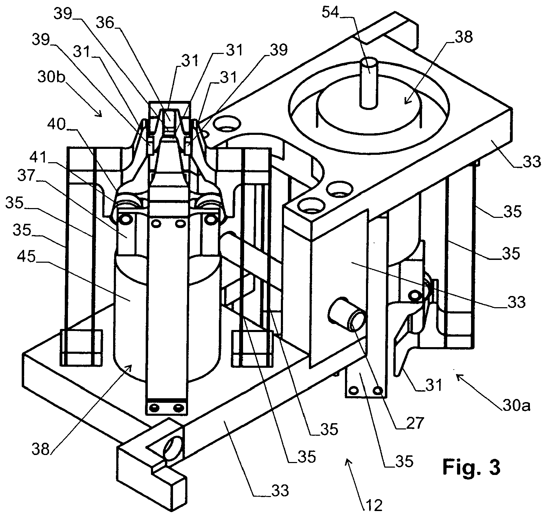

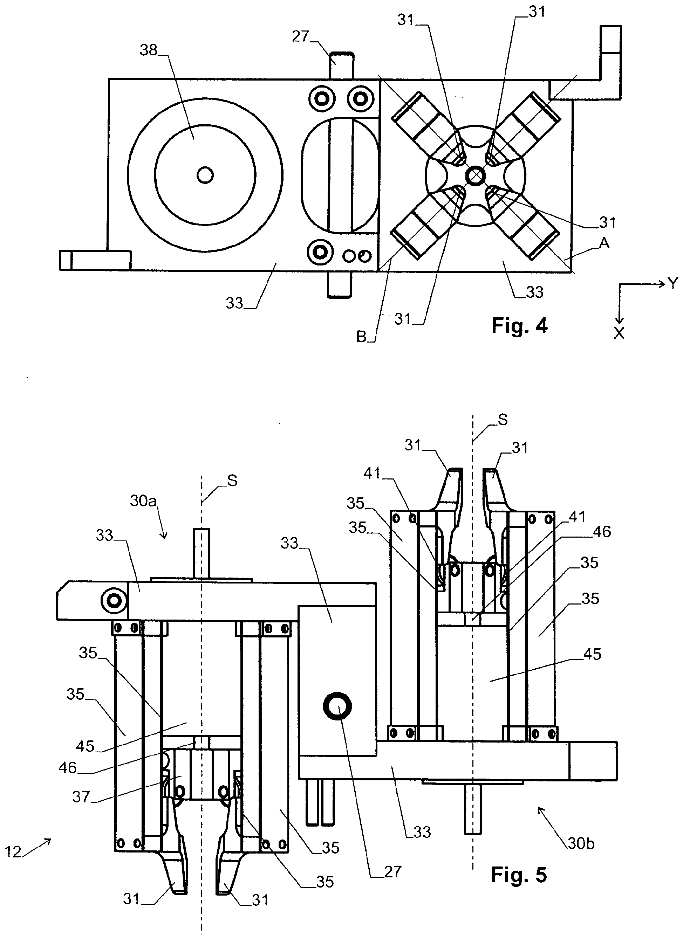

Der Greifer 12, dessen Aufbau am besten aus Fig. 3 bis 5 ersichtlich wird, ist im vorliegenden Beispiel mit zwei Greifhänden 30a, 30b ausgestattet, von denen jede mit vier Fingern 31 zum Ergreifen der Laborproben ausgestattet ist. Diese Greifhände besitzen unterschiedliche Greiferdurchmesser, d.h. sie sind zum Manipulieren von Laborproben unterschiedlicher Durchmesser ausgestattet. Je nachdem, was für Proben zu manipulieren sind, kann durch Schwenken des Greifers 12 um die Achse 27 die eine oder die andere Greifhand 30a bzw. 30b in eine Arbeitsstellung gebracht werden, in welcher ihre Finger 31 nach unten gerichtet sind und mit den Laborproben in Eingriff gebracht werden können. Es können auch drei oder mehr Greiferhände vorgesehen sind, von denen jeweils eine in die Arbeitsstellung gebracht werden kann, während sich die übrigen Greiferhände in einer Ruhestellung befinden. Fig. 6 und 7 zeigen den Greifer 12 während der Schwenkbewegung, während Fig. 4 und 5 den Greifer in einer seiner zwei Arbeitspositionen zeigen, in welcher die Greiferhand 30a sich in Arbeitsstellung befindet, während die Greiferhand 30b sich in Ruhestellung befindet. Um zwischen den beiden Greiferhänden 30a, 30b umzuschalten, muss der Greifer 12 um 180° um die Schwenkachse 27 verschwenkt werden.

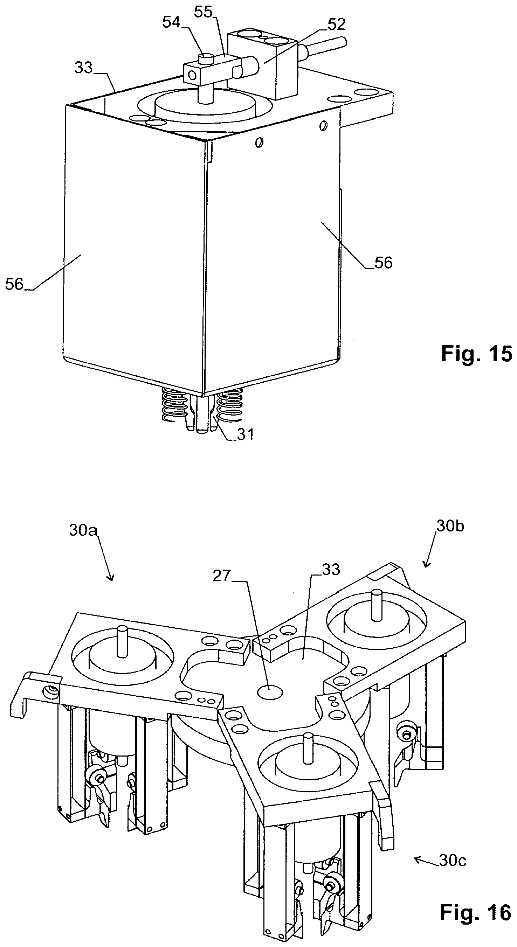

Wie aus Fig. 16 ersichtlich, können auch mehr als zwei Greifhände am gemeinsamen Träger 33 vorgesehen sein, z.B. drei Greifhände 30a, 30b, 30c, welche parallel zueinander und rotationssymmetrisch um eine vertikale Schwenkachse 27 angeordnet sind.

Jede Greiferhand 30a bzw. 30b besitzt, wie erwähnt, vier Finger 31, wobei jedoch auch drei oder mehr als vier Finger vorgesehen sein können. Für Laberproben, welche nur von zwei Seiten erfasst werden müssen, ist auch der Einsatz von nur zwei Fingern denkbar. Bevorzugt ist jedoch die Verwendung von vier Fingern, da bei Verwendung zylindrischer Laborproben in einer zweidimensionalen Matrix um jede Laborprobe herum vier Leerräume entstehen, welche Platz zum Einführen der Finger bieten. Wie aus Fig. 4 ersichtlich, sind die Finger deshalb jeweils paarweise in Ebenen A, B angeordnet, die unter +45° bzw. -45° zu den Richtungen X und Y stehen.

Die Finger 31 jedes Greifers 30a bzw. 30b sind symmetrisch um eine vertikale Achse S angeordnet, welche in Fig. 5 eingezeichnet ist. Sie sind radial zur Achse federnd auslenkbar und können von einem Antriebsmechanismus bewegt werden. Dies wird im Folgenden näher erläutert.

Wie in Fig. 3 dargestellt, ist an jedem Finger 31 an der der Achse S zugewandten Seite ein Körper 39 aus Schaumstoff (oder aus einem anderen Material, welches leichter deformierbar ist als der Finger selbst) angebracht. Diese Körper erleichtern das Ergreifen von glatten Objekten, wie z.B. Glasflaschen.

Wie insbesondere aus Fig. 3 und 5 ersichtlich, besitzt der Greifer 12 einen Träger 33, welcher fest mit der Achse 27 verbunden ist und jede der Greifhände 30a, 30b trägt. Jeder Finger 31 ist federnd mit dem Träger 33 verbunden, vorteilhaft über zwei parallele, beabstandet zueinander angeordnete Blattfedern 35.

Wie eingangs bereits erwähnt, wird durch die Verwendung von zwei (oder mehr) paralleler, beabstandet zueinander angeordneter Blattfedern sichergestellt, dass bei der im Folgenden näher beschriebenen Fingerbewegung die Finger nicht verkippt, sondern nur einer Translation ohne Rotation unterworfen werden, so dass deren Innenseiten 36 immer vertikal bleiben und plan auf den vertikalen Aussenseiten der Laborobjekte aufliegen können. Falls dieser Vorteil nicht genutzt werden soll, ist auch die Verwendung jeweils nur einer Blattfeder möglich.

Jede Blattfeder verläuft in entspanntem Zustand mit ihrer Längsrichtung im Wesentlichen parallel zur Achse S und liegt in einer tangential zur Achse S liegenden Ebene. An einem ersten Ende ist jede Blattfeder 35 mit dem Träger 33 verbunden, und an einem zweiten, dem ersten gegenüber liegenden Ende mit dem jeweiligen Finger 31. Damit ist das zweite, fingerseitige Ende jeder Blattfeder 35 radial federnd auslenkbar, während es in Tangentialrichtung im Wesentlichen nicht ausgelenkt werden kann.

Der Antriebsmechanismus für die Finger 31 umfasst ein Betätigungsorgan 37, welches konzentrisch zur Achse S angeordnet ist und von einem Betätigungsantrieb 38 entlang der Achse S verfahren werden kann. Ein Anker 54 des Betätigungsorgans erstreckt sich durch den Betätigungsantrieb. Die Finger 31 können durch geeignete Kraftumlenkung durch die achsiale Bewegung des Betätigungsorgans 37 in radialer Richtung (d.h. senkrecht zur Achse S) bewegt werden.

In der in Fig. 3 - 5 gezeigten Ausführung weist jeder Finger 31 zu diesem Zweck eine geneigt zur Achse verlaufende Anlauffläche 40 (siehe Fig. 3) auf, welche mit einer von vier Rollen 41 des Betätigungsorgans in Kontakt steht. Die Anlaufflächen 40 sind auf der der Achse S zugewandten Seite des Fingers angeordnet und verlaufen so, dass durch Bewegung des Betätigungsorgans 37 gegen die Finger 31 hin die Finger gegen die Kraft der Blattfedern 35 auseinander gedrückt werden. Dabei laufen die Rollen 41 (deren Drehachsen tangential zur Achse S stehen) mit geringer Reibung den Anlaufflächen 40 entlang. Pro Anlauffläche 40 ist mindestens eine Rolle 41 vorgesehen.

Der Betätigungsantrieb 38 muss in der Lage sein, eine lineare Bewegung des Betätigungsorgans 37 entlang der Achse S zu erzeugen. In einer vorteilhaften Ausführung umfasst der Betätigungsantrieb einen Elektromagneten 45, der bei Stromdurchfluss in der Lage ist, einen mit dem Betätigungsorgan 37 verbundenen Kolben 46 (Fig. 5) in einer Richtung entlang der Achse S zu bewegen. Dabei bewegt er die Finger 31 gegen die Kraft der Blattfedern 35 von ihrer inneren Stellung, in welcher sie die Laborprobe erfassen können, in ihre äussere Stellung, in welcher sie die Laborprobe freigeben. Bei Wegfall des Stroms durch den Elektromagneten fallen die Finger 31 wieder in ihre innere Stellung zurück und drücken dabei auch den Kolben 46 wieder in seine Grundstellung. Dadurch wird erreicht, dass bei Stromausfall eine bereits aufgenommene Laborprobe nicht fallen gelassen wird.

Der Betätigungsantrieb 38 ist fest mit dem Träger 33 verbunden. Der Betätigungsantrieb 38 und das Betätigungsorgan 37 sind im Raumbereich radial innerhalb der Blattfedern 35 angeordnet, so dass der vorhandene Raum gut genutzt wird.

Der Bewegungsablauf der beschriebenen Vorrichtung ist wie folgt:
Zum Aufnehmen einer Laborprobe wird zuerst der Tisch 2 mit den Probenhaltern 4 so entlang Richtung X verschoben, dass die gewünschte Laborprobe die richtige Position in Richtung X einnimmt. Gleichzeitig wird der Halter 11 in Richtung Y so verschoben, dass die Achse S der gewünschten Greifhand 30a, 30b (welche vorab in ihre Arbeitsstellung gebracht wurde) in Richtung Y koaxial zur gewünschten Laborprobe zu liegen kommt. Dann wird der Wagen 10 in Richtung Z abgesenkt und gleichzeitig wird das Betätigungsorgan 37 betätigt, wodurch die Finger 31 in ihre äussere Stellung gebracht werden. Der Greifer 12 wird soweit über die Laborprobe abgesenkt, dass die Finger 31 seitlich auf der Höhe der Laborprobe sind. Dann wird das Betätigungsorgan 37 freigegeben, so dass die Finger 31 in ihre innere Stellung zurückfallen und dabei die Laberprobe erfassen. Nun kann der Wagen 10 angehoben werden, wodurch die Laborprobe aus dem Probenhalter 4 entnommen wird. Nun kann die Laborprobe in Y- und Z-Richtung an eine gewünschte Position gefahren oder durch Drehen um die Achse 27 nötigenfalls auch verkippt werden. Zum Absetzen der Laborprobe wird der entsprechende umgekehrte Bewegungsablauf durchfahren.

Um Laborproben zu identifizieren, ist an der Vorrichtung, im vorliegenden Beispiel ruhend am Turm 15, ein Markierungsleser 49 angeordnet, welcher in der Lage ist, eine an der Seite der Laborprobe angeordnete Identifikations-Markierung automatisch zu lesen. Dabei kann es sich beispielsweise um einen Strichcode-Leser handeln. Um eine aufgenommene Laborprobe zu erfassen, kann diese durch Verfahren des Wagens 10 in Richtung Y zum Markierungsleser 49 geführt und dort gescannt werden.

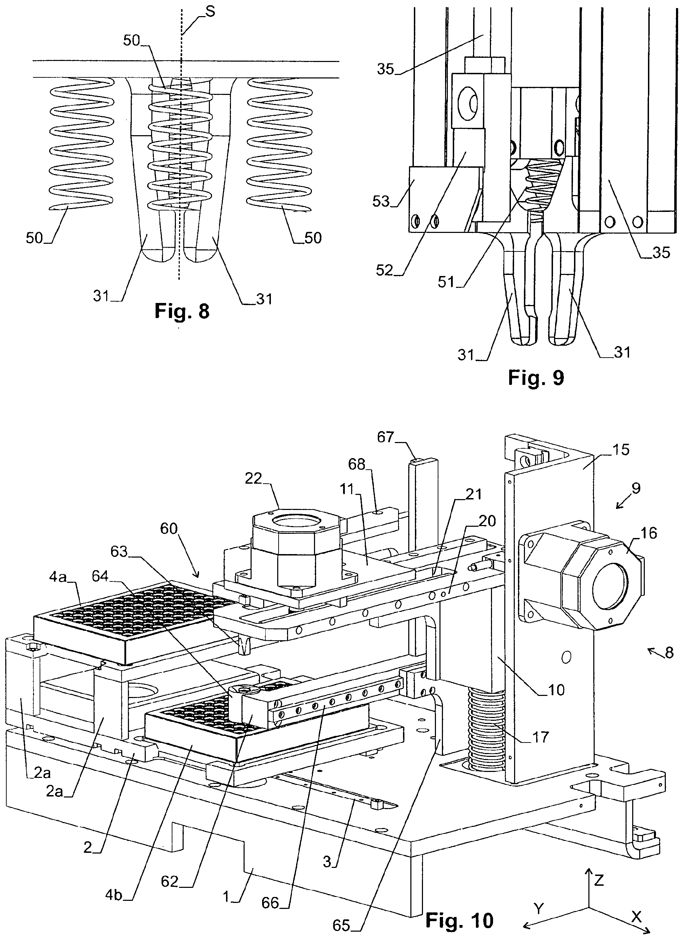

Sind einzelne Proben aus Probenhaltern zu entnehmen, in denen die Proben dicht nebeneinander gelagert sind, kann es dazu kommen, dass beim Aufnehmen einer Probe versehentlich auch eine oder mehrere benachbarte Proben bewegt, ja sogar etwas angehoben werden, falls die Finger 31 nicht ganz exakt positioniert sind und die benachbarten Proben berühren. Dieses Problem wird von der Lösung gemäss Fig. 8 behoben.

In der Ausführung nach Fig. 8 sind unten, d.h. probeseitig an der Greifhand eine oder mehrere Rückhaltefedern 50 (oder andere elastisch komprimierbare Federmittel) vorgesehen, und zwar von der Achse S her gesehen radial ausserhalb der Finger 31. Wird die Greifhand zur Aufnahme auf eine Probe abgesenkt, so drücken die Rückhaltefedern 50 auf die benachbarten Proben und halten diese fest, so dass sie nicht versehentlich angehoben werden.

Ein weiteres Problem, dass sich ergeben kann, liegt darin, dass beim Absetzen einer Probe diese an den Fingern 31 haften bleibt und somit nicht abgesetzt werden kann. Dieses Problem wird durch die Ausführung nach Fig. 9 gelöst.

In der Ausführung nach Fig. 9 ist zwischen den Fingern 31 eine Ausstossfeder 51 angeordnet, welche an ihrem oberen, vom Ende der Finger 31 abgewandten Ende fest gelagert ist, und deren unteres, dem Ende der Finger 31 zugewandtes Ende federnd ist.

Wird die Greifhand nach Fig. 9 auf eine Probe abgesenkt, so dass die Finger seitlich der Probe nach unten gleiten, so kommt das untere Ende der Ausstossfeder 51 gegen das obere Ende der Probe in Anschlag und wird während der weiteren Bewegung der Greifhand nach unten komprimiert. Wenn die Finger 31 sodann die Probe ergreifen und anheben, so bleibt die Ausstossfeder 51 im komprimierten Zustand, bis die Probe wieder abgesetzt und die Finger 31 nach aussen bewegt werden. Dann hilft die Kraft der Ausstossfeder 51, die Probe von den Fingern 31 abzulösen und auszustossen.

Zu beachten ist, dass die Lösungen gemäss Fig. 8 und 9 auch kombiniert werden können. Ferner sind sie nicht an eine spezielle Gestaltung des Antriebs der Finger 31 gebunden sind. Beide beruhen darauf, dass mindestens eine in Richtung parallel zur Achse S komprimierbare Feder vorgesehen ist, welche dazu geeignet ist, achsial von oben gegen die aufzunehmende Probe oder gegen benachbarte Proben der aufzunehmenden Probe zu drücken.

Anstelle von Spiralfedern können auch andere Federungsmechanismen verwendet werden, wie z.B. elastischer Schaumstoff.

In Fig. 9 ist weiter ein Probendetektor 52 dargestellt. Er dient zum Detektieren, ob von den Fingern 31 eine Probe ergriffen worden ist. Der Probendetektor 52 ist über eine Halterung 53 mit dem Träger 33 fest verbunden und befindet sich radial ausserhalb einer der Blattfedern 35. Er weist einen Annäherungssensor auf, der anspricht, wenn sich der jeweilige Finger 31 und somit die Blattfeder 35 in ihrer äusseren Position befinden, in welcher eine Probe ergriffen ist. Ist keine Probe ergriffen, so spricht der Probendetektor 52 nicht an. Auf diese Weise kann sicher festgestellt werden, ob eine Probe erfolgreich ergriffen worden ist oder nicht.

Der Annäherungssensor kann anstelle der Position einer Blattfeder 35 auch die Position einer der Finger 31 detektieren.

Eine alternative Ausgestaltung des Probendetektors 52 ist in Fig. 15 dargestellt. Hier ist der Probendetektor 52 dazu ausgestaltet, die achsiale Bewegung des Betätigungsorgans 37 zu detektieren. Hierzu ist der Probendetektor 52 als Annäherungssensor ausgestaltet, der einen am Anker 54 des Betätigungsorgans 37 befestigten Kopf 55 detektiert. Wenn die Finger 31 eine Probe erfolgreich ergreifen, befindet sich der Kopf 55 an einer tieferen Position als wenn die Finger 31 leer sind, was vom Annäherungssensor festgestellt wird.

Die Ausführung von Fig. 15 zeigt weiter, dass die Greifhand in einem Gehäuse mit Seitenwänden 56 untergebracht werden kann.

Eine weitere Ausführung einer Vorrichtung zum Manipulieren von Laborproben ist in Fig. 10 bis 12 dargestellt.

Wie die Vorrichtung gemäss den vorangehenden Figuren besitzt sie eine stationäre Basis 1, die einen Tisch 2 trägt. Der Tisch 2 ist mit einem Antrieb entlang einer Schiene 3 in einer horizontalen Richtung X verfahrbar und trägt zwei Probenhalter 4a, 4b, welche gleich aufgebaut sind wie jene gemäss den vorangehenden Figuren und von denen jeder eine zweidimensionale Anordnung von Lagerpositionen zur Aufnahme der Proben besitzt. Allerdings ist ein Erster der Probenhalter, 4a, höher gelagert als ein Zweiter der Probenhalter, 4b. Hierzu ist auf dem Tisch 2 eine nach oben ragende Halterung 2a vorgesehen, welche den zweiten Probenhalter 4b trägt. Die Probenhalter 4a, 4b sind vorzugsweise seitlich versetzt zueinander angeordnet, so dass auch der untere Probenhalter 4b von oben zugreifbar ist.

Auf der Basis 1 ist zudem wiederum eine Manipulationsvorrichtung 8 angeordnet. Diese besitzt einen Lift 9, der einen in vertikaler Richtung Z verfahrbaren Wagen 10 trägt. Der Wagen 10 trägt seinerseits einen in horizontaler Richtung Y, senkrecht zu X und Z, verfahrbaren Halter 11, an welchem eine Ausstossvorrichtung 60 angeordnet ist.

Der Lift 9 ist im Wesentlichen gleich aufgebaut wie jener nach Fig. 1 und umfasst einen Turm 15 und einen Liftantrieb 16 sowie eine Druckfeder 17.

Der Wagen 10 besitzt wiederum einen horizontalen Arm 20 mit Führung 21 für den Halter 11. Der Halter 11 weist einen Horizontalantrieb 22 auf.

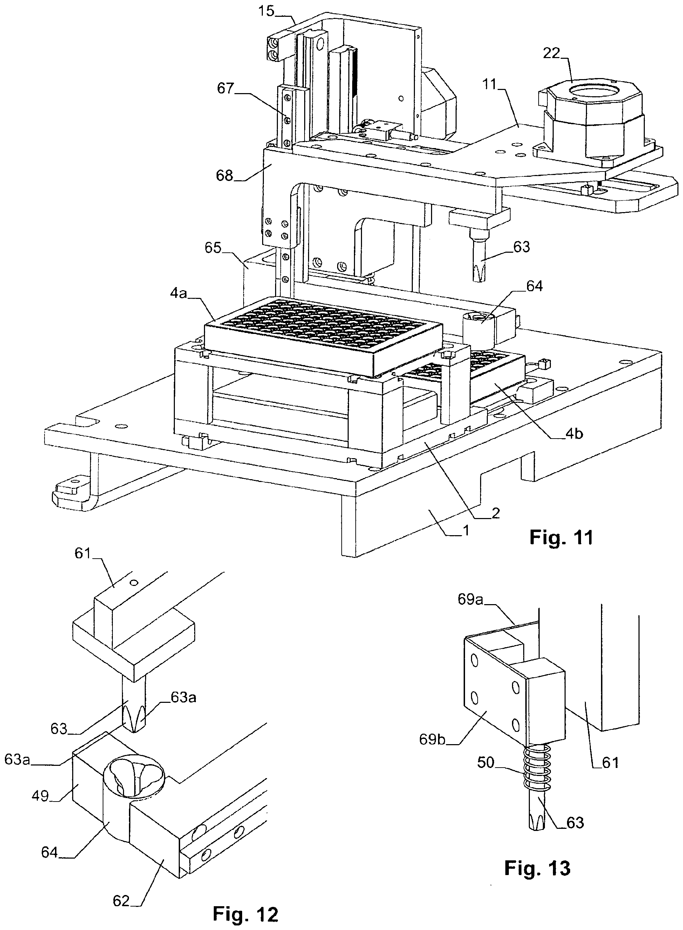

Am Halter 11 ist ein erster horizontaler Arm 61 angeordnet (siehe Fig. 12), an welchem ein nach unten ragender Stössel 63 der Ausstossvorrichtung 60 befestigt ist. Am unteren Ende des Stössels 63 sind seitlich vier zu seiner Längsachse schräge Seitenflächen 63a vorgesehen, so dass sich der Stössel gegen sein Ende hin verjüngt. Die verjüngte Form ermöglicht ein Einführen des Stössels 63 in den jeweiligen Probenhalter 4a, 4b, selbst wenn er nicht genau auf die jeweilige Lagerposition ausgerichtet ist. Da die Lagerpositionen viereckigen Querschnitt haben, während der Querschnitt der darin gelagerten Proben in der Regel rund und rohrförmig ist, ermöglicht die zur Spitze hin viereckige Ausgestaltung des Stössels 63 ein sicheres Beaufschlagen der Proben, selbst wenn der Stössel nicht genau auf die Probe ausgerichtet ist.

Um ein seitliches Auslenken des Stössels 63 beim Einführen in eine nicht genau positionierte Lagerposition zu ermöglichen, ist es vorteilhaft, den Stössel 63 seitlich (d.h. quer zu seiner Längsachse) elastisch auslenkbar zu lagern. Hier kann, wie in Fig. 13 dargestellt, der Stössel 63 mit zwei parallel Blattfedern 69a, 69b gehaltert sein, wobei die Ebenen der Blattfedern parallel zur Längsachse des Stössels angeordnet sind, so dass der Stössel seitlich elastisch auslenkbar, in seiner Längsrichtung jedoch fest gehalten ist.

Ausserdem kann beim Stössel 63 eine Rückhaltefeder 50 (oder ein anderes beim Einführen des Stössels 63 in eine Lagerposition elastisch komprimierbares Federmittel) angeordnet sein, wie dies in Fig. 13 dargestellt ist. In der Ausführung nach Fig. 13 ist die Rückhaltefeder 50 Platz sparend als Spiralfeder ausgeführt, die um den Stössel herum läuft. Wird der Stössel 63 in eine Lagerposition der Probenhalter 4a, 4b abgesenkt, so drückt die Rückhaltefeder 50 in Längsrichtung des Stössels 63 komprimiert und drückt den Probenhalter 4a, 4b nach unten, so dass er beim Herausziehen des Stössels 63 nicht versehentlich angehoben wird.

Weiter steht auf der Basis 1 eine Zwischenhalterung 65 (siehe Fig. 10), welche einen zweiten horizontalen Arm 62 trägt. Der zweite Arm 62 ist in Y-Richtung verschiebbar über eine Führung 66 an der Zwischenhalterung 65 befestigt. Vom zweiten Arm 62 ragt ein Vertikalführung 67 nach oben. An dieser ist vertikal verschiebbar aber horizontal zwangsgeführt das hintere Ende eines Koppelglieds 68 angeordnet. Das vordere Ende des Koppelglieds 68 ist fest mit dem Halter 11 verbunden.

Der Halter 11 und somit auch die Ausstossvorrichtung 60 sind über das Koppelglied 68 und die Vertikalführung 67 so mit dem zweiten Arm 66 verbunden, dass jede Bewegung der Ausstossvorrichtung 60 in Richtung Y zu einer entsprechenden Bewegung des zweiten Arms 62 führt. Dies erlaubt es, die Ausstossvorrichtung 60 und insbesondere deren Stössel 63 dauernd in einer Position exakt oberhalb eines am zweiten Arm 62 angeordneten Probezwischenlagers 64 zu halten.

Die Position des Probezwischenlagers 64 in vertikaler Richtung Z ist fest und so bemessen, dass das Probezwischenlagers 64 sowie auch der zweite Arm 62 vertikal zwischen der Unterseite des oberen Probenhalters 4a und der Oberseite des unteren Probenhalters 4b angeordnet ist.

Das Probezwischenlager 64 ist so ausgeführt, dass mit dem Stössel 63 von oben eine Probe aus dem oberen Probenhalter 4a in sie eingeschoben werden kann. Durch Reibschluss hält das Probezwischenlager sodann die Probe fest. Durch eine zweite Stossbewegung des Stössels 63 kann die Probe sodann nach unten in den unteren Probenhalter 4b ausgestossen werden.

Die Vorrichtung erlaubt es somit, Proben aus beliebigen Lagerpositionen des oberen Probenhalters 4a in beliebige andere Lagerpositionen des unteren Probenhalters 4b umzulagern.

Hierzu werden zuerst der Tisch 2 sowie der Halter 11 so verfahren, dass der Stössel 63 direkt oberhalb der Position der auszustossenden Probe in Probenhalter 4a zu liegen kommt. Der Wagen 10 ist dabei soweit hochgefahren, dass der Stössel höher als das obere Ende der Probe liegt. Durch die Zwangsführung über das Koppelglied 68 und die Vertikalführung 67 ist sichergestellt, dass das Probezwischenlager 64 direkt vertikal unterhalb der auszustossenden Probe liegt.

Nun wird der Wagen 10 abgesenkt, so dass der Stössel 63 die Probe aus dem oberen Probenhalter 4a nach unten ausstösst und in das Probezwischenlager 64 einführt. Sodann wird der Wagen 10 wieder auf seine vorherige Position angehoben.

Jetzt werden der Tisch 2 und die Halterung 11 in X- bzw. Y-Richtung so verfahren, dass Stössel 63 und Probezwischenlager 64 vertikal über derjenigen Lagerposition des unteren Probenhalters 4b zu liegen kommen, an welcher die Probe abzusetzen ist. Nun kann der Wagen 10 wieder abgesenkt werden, so dass Stössel 63 die Probe aus dem Probezwischenlager 64 ausstösst und in die gewünschte Lagerposition des unteren Probenhalters 4b einführt. Dann wird der Wagen 10 wieder angehoben und der Probentransfer ist beendet.

Optional kann am Probezwischenlager 64 noch ein in Fig. 11 schematisch eingezeichneter Markierungsleser 49 angeordnet werden, mit welchen eine Identifikations-Markierung auf den Proben ausgelesen werden kann, welche sich im Probezwischenlager 64 befinden.

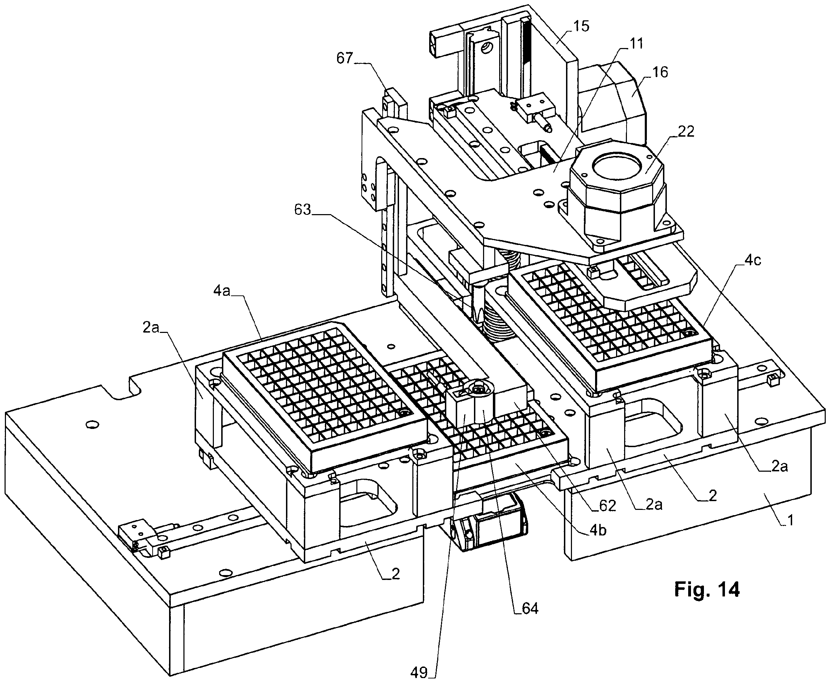

Die Ausführung nach Fig. 10 besitzt genau einen oberen Probehalter 4a. Eine Alternative hierzu ist die Ausführung nach Fig. 14, welche zwei obere Probehalter 4a, 4c aufweist. Jeder Probehalter ist über ihre eigene Halterung 2a auf dem Tisch 2 angeordnet.

Indem Platz für zwei obere Probehalter 4a, 4c vorgesehen ist, welche gemeinsam mit dem Tisch verfahrbar sind, kann der Durchsatz bei gleichbleibender Geschwindigkeit der Zulieferung von Probehaltern erhöht werden.

Ersichtlich ist in Fig. 14 auch der Markierungsleser 49 am Probezwischenlager 64, welcher zusätzlich oder alternativ auch einen Anwesenheitssensor zur Detektion der Anwesenheit einer Probe im Probenzwischenlager 62 aufweist.

## Patentansprüche

1. Vorrichtung zum Manipulieren von Laborproben, welche mindestens einen Greifer (12) aufweist, der von oben über eine Laborprobe fahrbar ist und der mehrere, um eine Achse (S) angeordnete Finger (31) aufweist, welche seitlich gegen die Laborprobe drückbar sind um die Laborprobe zu erfassen, sowie einen Antriebsmechanismus (37, 38) um die Finger (31) zum Ergreifen bzw. Loslassen der Laborprobe zu bewegen, wobei jeder Finger (31) radial zur Achse (S) federnd auslenkbar ist, wobei
der Greifer (12) mindestens zwei Greiferhände (30a, 30b, 30c) aufweist, und wobei die Greiferhände (30a, 30b) an einem gemeinsamen Träger (33) angeordnet sind, **dadurch gekennzeichnet, dass** die Finger (31) der mindestens zwei Greiferhände (30a, 30b) unterschiedliche Greifdurchmesser zum Ergreifen von Laborproben mit unterschiedlichen Probedurchmessern aufweisen.

2. Vorrichtung nach Anspruch 1, wobei der Antriebsmechanismus (37, 38) entlang der Achse (S) verfahrbares Betätigungsorgan (37) aufweist, sowie einen Betätigungsantrieb (38) zum Verfahren des Betätigungsorgans (37) entlang der Achse (S), wobei durch achsiale Bewegung des Betätigungsorgans (37) die Finger (31) radial bewegbar sind.

3. Vorrichtung nach Anspruch 2, wobei jeder Finger (31) eine geneigt zur Achse (S) verlaufende Anlauffläche (40) aufweist, wobei das Betätigungsorgan (37) Rollen (41) aufweist, und wobei jede Anlauffläche (40) mit mindestens einer der Rollen (41) in Kontakt steht.

4. Vorrichtung nach einem der vorangehenden Ansprüche, wobei der Betätigungsantrieb (38) einen Elektromagneten (45) und einen vom Elektromagneten (45) entlang der Achse (S) bewegbaren Kolben (46) aufweist, wobei der Kolben (46) mit dem Betätigungsorgan (37) verbunden ist, und insbesondere wobei die Finger (31) eine äussere und eine innere Stellung aufweisen, wobei die Laborprobe von den Fingern (31) in der inneren Stellung erfassbar ist und in der äusseren Stellung freigebbar ist, wobei sich die Finger (31) bei nicht von Strom durchflossenem Elektromagneten (45) in der inneren Stellung befinden.

5. Vorrichtung nach einem der vorangehenden Ansprüche, wobei jeder Finger (31) an mindestens einer Blattfeder (35) gehalten ist.

6. Vorrichtung nach Anspruch 5, wobei jede Blattfeder (35) an einem ersten Ende mit einem Träger (33) des Greifers (12) verbunden ist und an einem zweiten, dem ersten gegenüber liegenden Ende mit einem der Finger (31) verbunden ist, wobei das zweite Ende jeder Blattfeder (35) radial zur Achse (S) federnd auslenkbar ist, und insbesondere wobei jede Blattfeder (35) eine Längsrichtung besitzt, welche sich im wesentlichen parallel zur Achse (S) erstreckt.

7. Vorrichtung nach einem der Ansprüche 2 bis 3 und nach Anspruch 6, wobei der Betätigungsantrieb (38) fest mit dem Träger (33) verbunden ist.

8. Vorrichtung nach einem der Ansprüche 5 bis 7, wobei jeder Finger (31) an mindestens zwei parallelen, beabstandet zueinander angeordneten Blattfedern (35) befestigt ist.

9. Vorrichtung nach einem der vorangehenden Ansprüche, wobei der Träger (33) mindestens zwischen einer ersten und einer zweiten Arbeitsposition verschwenkbar ist, wobei in der ersten Arbeitsposition eine der Greiferhände und in einer zweiten Arbeitsposition die andere der Greiferhände mit den Laborproben in Eingriff bringbar ist, und insbesondere wobei der Träger (33) durch Schwenken um 180° um eine horizontale Schwenkachse (27) zwischen der ersten und der zweiten Arbeitsposition verschwenkbar ist.

10. Vorrichtung nach einem der vorangehenden Ansprüche, wobei der Greifer (12) einen Probendetektor (52) aufweist, um zu detektieren, ob von den Fingern (31) eine Probe ergriffen ist.

11. Vorrichtung nach Anspruch 10, wobei mit dem Probendetektor (52) eine Position einer der Finger (31) und oder einer Feder (35), an welcher der Finger (31) gelagert ist, detektierbar ist.

12. Vorrichtung nach Anspruch 11, wobei mit dem Probendetektor (52) eine Position des Antriebsmechanismus (37, 38) detektierbar ist.

13. Vorrichtung nach einem der vorangehenden Ansprüche, wobei sie einen Markierungsleser (49) aufweist, um eine an den Laborproben angeordnete Identifikations-Markierung automatisch zu lesen, und insbesondere wobei der Markierungsleser (49) ruhend angeordnet ist und wobei die Vorrichtung ausgestaltet ist, um eine vom Greifer (12) aufgenommene Laborprobe zum Markierungsleser (49) zu bewegen.

14. Vorrichtung nach einem der vorangehenden Ansprüche, wobei die Vorrichtung weiter einen Tisch (2) aufweist, auf welchem die Laborproben vom Greifer (12) zugreifbar sind, **dadurch gekennzeichnet, dass** der Tisch in eine erste horizontale Richtung X verfahrbar und der Greifer in eine zweite, horizontale Richtung Y verfahrbar sind, und insbesondere wobei die Richtung X senkrecht zur Richtung Y steht.

15. Vorrichtung nach Anspruch 14, wobei die Vorrichtung eine Basis (1) aufweist, auf welcher der Tisch (2) entlang der Richtung X verfahrbar angeordnet ist, und wobei auf der Basis (1) weiter ein Lift (9) angeordnet, welcher einen in einer vertikalen Richtung Z verfahrbaren Wagen (10) trägt, wobei der Wagen (10) einen in Richtung Y verfahrbaren Halter (11) trägt, und wobei am Halter (11) der Greifer (12) angeordnet ist.

16. Vorrichtung nach einem der vorangehenden Ansprüche, wobei der Greifer (12) mindestens ein parallel zur Achse (S) komprimierbares Federmittel (50, 51), insbesondere mindestens eine Feder, aufweist, welche dazu geeignet ist, beim Aufnehmen einer Laborprobe achsial gegen die Laborprobe und/oder gegen zur aufzunehmenden Laborprobe benachbarte Laborproben zu drücken.

17. Vorrichtung nach Anspruch 16, wobei der Greifer eine zwischen den Fingern (31) angeordnete, parallel zur Achse (S) komprimierbare Ausstossfeder (50, 51) aufweist, welche dazu geeignet ist, beim Aufnehmen einer Laborprobe achsial gegen die Laborprobe zu drücken.

18. Vorrichtung nach einem der vorangehenden Ansprüche, wobei der Greifer mindestens eine von der Achse (S) her gesehen radial ausserhalb der Finger (31) angeordnete, parallel zur Achse (S) komprimierbare Rückhaltefeder (50) aufweist, welche dazu geeignet ist, beim Aufnehmen einer Laborprobe achsial gegen zur aufzunehmenden Laborprobe benachbarte Laborproben zu drücken.

19. Vorrichtung nach einem der vorangehenden Ansprüche, umfassend
eine stationäre Basis (1),
einen in einer ersten, horizontalen Richtung X gegenüber der Basis (1) verfahrbaren Tisch (2),
mindestens einen oberen Probenhalter (4a, 4c) und mindestens einen unteren Probenhalter (4b), welche auf dem Tisch (2) angeordnet sind und von denen jeder eine Anordnung von Lagerpositionen zur Aufnahme von Proben besitzt, wobei der obere Probenhalter (4a) höher als der untere Probenhalter (4b) angeordnet ist,
einen an der Basis (1) angeordneten Lift (9) mit einem vertikal verfahrbaren Wagen (10),
eine in einer zweiten horizontalen Richtung Y verfahrbar am Wagen (10) angeordnete Ausstossvorrichtung (60) mit einem Stössel (63),
ein unterhalb und beabstandet vom Stössel (63) angeordnetes Probezwischenlager (64), welches in Richtung Z zwischen dem oberen und dem unteren Probenhalter (4a, 4b) angeordnet ist und in Richtung Y zwangsgeführt mit der Ausstossvorrichtung gekoppelt ist,
wobei mit dem Stössel (63) eine Probe von oben aus einer ersten Lagerposition im oberen Probenhalter (4a) in das Probezwischenlager (64) stossbar ist, sowie vom Probezwischenlager (64) in eine zweite Lagerposition des unteren Probenhalters (4b).

20. Vorrichtung nach Anspruch 19, wobei die Probenhalter (4a, 4b) seitlich versetzt zueinander angeordnet sind.

21. Vorrichtung nach einem der Ansprüche 19 oder 20, wobei das Probezwischenlager (64) und die Ausstossvorrichtung (60) über eine Vertikalführung (67) vertikal zueinander verschiebbar aber horizontal zwangsgeführt verbunden sind.

22. Vorrichtung nach einem der Ansprüche 19 bis 21, wobei am Probezwischenlager (64) ein Markierungsleser (49) zum Auslesen von Markierungen auf sich im Probezwischenlager (64) befindenden Proben und/oder ein Anwesenheitsdetektor (49) zur Detektion der Anwesenheit einer Probe im Probenzwischenlager angeordnet ist.

23. Vorrichtung nach einem der Ansprüche 19 bis 22 mit mindestens zwei oberen Probenhaltern (4a, 4c).

24. Vorrichtung nach einem der Ansprüche 19 bis 23, wobei der Stössel (63) sich gegen ein Ende hin verjüngt zum vereinfachten Einführen des Stössels (63) in eine Lagerposition.

25. Vorrichtung nach Anspruch 24, wobei der Stössel (63) beim Ende vier zu einer Längsachse des Stössels schräge Seitenflächen (63a) aufweist.

26. Vorrichtung nach einem der Ansprüche 19 bis 25, wobei der Stössel quer zu einer Längsachse des Stössels elastisch auslenkbar ist oder quer zur Längsachse elastisch auslenkbar gelagert ist.

27. Vorrichtung nach einem der Ansprüche 19 bis 26, wobei beim Stössel mindestens ein Federmittel (50) angeordnet ist, welches beim Einführen des Stössels (63) in eine Lagerposition zum Rückhalten des Probehalters elastisch komprimierbar ist.

## Claims

1. Device for handling laboratory samples, comprising at least one gripper (12) movable from above over a sample and comprising multiple fingers (31) arranged around an axis (S), which fingers are pushable against the sample for gripping the sample, as well as an actuator mechanism (37, 38) for moving the fingers (31) in order to grip or to dump the sample, wherein each finger (31) is elastically displaceable radially to the axis (S), wherein the gripper (12) has at least two gripper hands (30a, 30b, 30c) and wherein the gripper hands (30a, 30b) are arranged at a common carrier (33),
**characterized in that** the fingers (31) of the at least two gripper hands (30a, 30b) have different gripping diameters for gripping samples with different sample diameters.

2. Device according to claim 1, wherein the actuator mechanism (37, 38) comprises an actuation member (37) which is movable along the axis (S), as well as an actuator drive (38) for moving the actuation member (37) along the axis (S), wherein the fingers (31) are radially movable by an axial movement of the actuation member (37).

3. Device according to claim 2, wherein each finger (31) comprises a camming face (40) which is inclined to the axis, wherein the actuation member (37) comprises rolls (41) and wherein each camming face (40) contacts at least one of the rolls (41).

4. Device according to one of the preceding claims, wherein the actuator drive (38) comprises an electromagnet (45) and a piston (46) which is movable by the electromagnet (45) along the axis (S), wherein the piston (46) is attached to the actuation member (37), and particularly wherein the fingers have an outer and inner position, wherein the sample is graspable in the inner position by the fingers (31) and dischargeable in the outer position, wherein the fingers (31) reside in the inner position when no current flows through the electromagnet (45).

5. Device according to one of the preceding claims, wherein each finger (31) is held by at least one leaf spring (35).

6. Device according to claim 5, wherein each leaf spring (35) is connected at a first end to a carrier (33) of the gripper (12) and is connected to one of the fingers (31) at a second end opposite of the first end, wherein the second end of each leaf spring (35) is elastically movable radially to the axis (S), and particularly wherein each leaf spring (35) has a longitudinal direction which extends substantially parallel to the axis (S).

7. Device according to one of the claims 2 to 3 and claim 6, wherein the actuator mechanism (38) is firmly connected to the carrier (33).

8. Device according to one of the claims 5 to 7, wherein each finger is attached to at least two parallel leaf springs (35) arranged at a mutual distance.

9. Device according to one of the preceding claims, wherein the carrier (33) is pivotal at least between a first and a second working position, wherein in the first working position one of the gripping hands, and in the second working position the other one of the gripping hands, is able to be brought in contact with the samples and particularly wherein the carrier (33) is pivotal by 180° between the first and the second working position by swinging around a horizontal pivot axis (27).

10. Device according to claim 1, wherein the gripper (12) comprises a sample detector (52) in order to detect if a sample is gripped by the fingers (31).

11. Device according to claim 10, wherein a position of one of the fingers (31) and/or of a spring (35) to which the finger (31) is mounted is detectable by the sample detector (52).

12. Device according to claim 11, wherein a position of the actuator mechanism (37, 38) is detectable by the sample detector (52).

13. Device according to one of the preceding claims, further comprising a mark reader (49), in order to automatically read an identification mark arranged on the samples, and particularly wherein the mark reader (49) is stationary and wherein the device is adapted to move a sample taken be the gripper (12) to the mark reader (49).

14. Device according to one of the preceding claims, wherein the device further comprises a table (2) on which the samples are graspable by the gripper (12), **characterized in that** the table is movable in a first horizontal direction X and the gripper is movable in a second horizontal direction Y, and particularly wherein the direction X is perpendicular to the direction Y.

15. Device according to claim 14, wherein the device comprises a base (1) on which the table is arranged movably along the direction X, and wherein a lift (9) is mounted to the base (1), which carries a wagon (10) which is movable in a vertical direction Z, wherein the wagon (10) carries a holder (11) which is movable in direction Y, wherein the gripper (12) is arranged on the holder (11).

16. Device according to one of the preceding claims, wherein the gripper (12) comprises at least one spring member (50, 51), which is compressible parallel to the axis (S), particularly at least one spring adapted to axially push against the sample and/or against neighbouring samples of the sample to be gripped, while gripping a sample.

17. Device according to claim 16, wherein the gripper comprises a compressible discharge spring (50, 51), which is arranged between the fingers (31) parallel to the axis (S) and which is adapted to axially push against the sample while gripping it.

18. Device according to one of the preceding claims, wherein the gripper comprises at least one retaining spring (50) which is compressible parallel to the axis and which is arranged, seen from the axis, radially outside of the fingers (31), and adapted to axially push against neighbouring samples of the sample to be gripped while gripping a sample.

19. Device according to one of the preceding claims, comprising
a stationary base (1),
a table (2) movable in a first horizontal direction X with respect to the base (1),
at least one upper sample holder (4a, 4c) and at least one lower sample holder (4b), which are arranged on the table (2) and each of which has an arrangement of storage positions for an accommodation of samples, wherein the upper sample holder (4a) is arranged higher than the lower sample holder (4b),
a lift (9) arranged on the base (1), with a vertically movable wagon (10),
an ejection device (60) with a plunger (63), movable in a second horizontal direction Y, arranged on the wagon (10),
a sample intermediate storage (64) which is arranged below and spaced from the plunger (63) and which is arranged in a vertical direction Z between the upper and the lower sample holders (4a, 4b) and which is coupled with the ejection device for being commonly moved with the ejection device in said direction Y,
wherein a sample is pushable with the plunger (63), from above, out of a first storage position of the upper storage holder (4a), into the sample intermediate storage (64) as well as from the sample intermediate storage (64) into a second storage position of the lower storage holder (4b).

20. Device according to claim 19, wherein the storage holders (4a, 4b) are laterally displaced to one another.

21. Device according to one of the claims 19 or 20, wherein the sample intermediate storage (64) and said ejection device (60) are vertically slidable in respect to each other by a vertical guide (67) but horizontally fixed in respect to each other.

22. Device according to one of the claims 19 to 21, wherein a mark reader (49) for reading out marks of samples located in the sample intermediate storage (64), is arranged at the sample intermediate storage (64) and/or a presence detector (49) for detection of the presence of a sample is arranged at the sample intermediate storage.

23. Device according to one of the claims 19 to 22, comprising at least two upper sample holders (4a, 4c) .

24. Device according to one of the claims 19 to 23, wherein the plunger (23) tapers towards one end, for an easy insertion of the plunger (63) into a storage position.

25. Device according to claim 24, wherein the plunger (63) comprises, at one end, four side surfaces (63a) inclined to a longitudinal axis of the plunger.

26. Device according to one of the claims 19 to 25, wherein the plunger is elastically deformable transversally to a longitudinal axis of the plunger or is mounted, transversally to longitudinal axis, in elastically displaceable manner.

27. Device according to one of the claims 19 to 26, wherein at least one spring member (50) is arranged on the plunger and is elastically compressible during the insertion of the plunger into a storage position for retaining the sample holder.

## Revendications

1. Dispositif pour la manipulation d'échantillons de laboratoire, comprenant au moins une pince (12) mobile par le haut au-dessus d'un échantillon et comprenant plusieurs doigts (31) disposés autour d'un axe (S), lesquels doigts peuvent être poussés contre l'échantillon pour saisir l'échantillon, ainsi qu'un mécanisme d'entraînement (37, 38) pour déplacer les doigts (31) afin de saisir ou de libérer l'échantillon, dans lequel chaque doigt (31) est déplaçable élastiquement radialement par rapport à l'axe (S), dans lequel la pince (12) comporte au moins deux mains de préhension (30a, 30b, 30c) et dans lequel les mains de préhension (30a, 30b) sont disposées sur un support commun (33),
**caractérisé en ce que** les doigts (31) des au moins deux mains de préhension (30a, 30b) ont des diamètres de préhension différents pour la préhension d'échantillons de diamètres différents.

2. Dispositif selon la revendication 1, dans lequel le mécanisme d'entraînement (37, 38) comprend un élément d'actionnement (37) qui peut être déplacé le long de l'axe (S), et un entraînement d'actionnement (38) pour déplacer l'élément d'actionnement (37) le long de l'axe (S), dans lequel les doigts (31) peuvent être déplacés radialement par le mouvement axial de l'élément d'actionnement (37).

3. Dispositif selon la revendication 2, dans lequel chaque doigt (31) comprend une surface de contact (40) qui est inclinée par rapport à l'axe (S), dans lequel l'élément d'actionnement (37) comprend des rouleaux (41), et dans lequel chaque surface de contact (40) est en contact avec au moins un des rouleaux (41).

4. Dispositif selon l'une des revendications précédentes, dans lequel l'entraînement d'actionnement (38) comprend un électroaimant (45) et un plongeur (46) déplaçable par l'électroaimant (45) le long de l'axe (S), dans lequel le plongeur (46) est relié à l'élément d'actionnement (37), et en particulier dans lequel les doigts (31) ont une position extérieure et une position intérieure, dans lequel l'échantillon de laboratoire peut être saisie par les doigts (31) dans la position intérieure et peut être libéré dans la position extérieure, dans lequel les doigts (31) sont dans la position intérieure lorsque l'électroaimant (45) n'est pas traversé par un courant.

5. Dispositif selon l'une des revendications précédentes, chaque doigt (31) étant maintenu sur au moins un ressort à lame (35).

6. Dispositif selon la revendication 5, dans lequel chaque ressort à lame (35) est relié à une première extrémité à un support (33) de la pince (12) et est relié à une deuxième extrémité, opposée à la première, à l'un des doigts (31), dans lequel la deuxième extrémité de chaque ressort à lame (35) peut être déviée élastiquement radialement par rapport à l'axe (S), et dans lequel en particulier chaque ressort à lame (35) a une direction longitudinale qui s'étend essentiellement parallèlement à l'axe (S).

7. Dispositif selon l'une des revendications 2 à 3 et selon la revendication 6, dans lequel l'entraînement d'actionnement (38) est relié de manière fixe au support (33).

8. Dispositif selon l'une des revendications 5 à 7, dans lequel chaque doigt est attaché à au moins deux ressorts à lames (35) parallèles et espacés.

9. Dispositif selon l'une des revendications précédentes, dans lequel le support (33) peut pivoter au moins entre une première et une deuxième position de travail, dans lequel, dans la première position de travail, l'une des mains de préhension et, dans une deuxième position de travail, l'autre des mains de préhension peuvent être amenées en contact avec les échantillons de laboratoire, et en particulier dans lequel le support (33) peut pivoter de 180° autour d'un axe de pivotement horizontal (27) entre la première et la deuxième position de travail.

10. Dispositif selon l'une des revendications précédentes, dans lequel la pince (12) possède un détecteur d'échantillons (52) pour détecter si un échantillon est saisi par les doigts (31).

11. Dispositif selon la revendication 10, dans lequel le détecteur d'échantillons (52) est capable de détecter la position d'un des doigts (31) et/ou d'un ressort (35) sur lequel le doigt (31) est appuyé.

12. Dispositif selon la revendication 11, dans lequel une position du mécanisme d'entraînement (37, 38) est détectable avec le détecteur d'échantillons (52).

13. Dispositif selon l'une des revendications précédentes, comprenant en outre un lecteur de marques (49) pour lire automatiquement une marque d'identification disposée sur les échantillons de laboratoire, et en particulier dans lequel le lecteur de marques (49) est disposé dans une position fixe et dans lequel l'appareil est conçu pour déplacer un échantillon de laboratoire prélevé par la pince (12) vers le lecteur de marques (49).

14. Dispositif selon l'une des revendications précédentes, comprenant en outre une table (2) sur laquelle les échantillons de laboratoire peuvent être accessibles par la pince (12), **caractérisé en ce que** la table peut être déplacée dans une première direction horizontale X et la pince peut être déplacée dans une deuxième direction horizontale Y, et en particulier dans lequel la direction X est perpendiculaire à la direction Y.

15. Dispositif selon la revendication 14, comprenant une base (1) sur laquelle la table (2) est agencée de manière à être mobile le long de la direction X, et dans lequel un élévateur (9) est en outre agencé sur la base (1), lequel élévateur porte un chariot (10) mobile dans une direction verticale Z, dans lequel le chariot (10) porte un support (11) mobile dans la direction Y, et dans lequel la pince (12) est disposée sur le support (11).

16. Dispositif selon l'une des revendications précédentes, dans lequel la pince (12) comporte au moins un moyen de ressort (50, 51) compressible parallèlement à l'axe (S), en particulier au moins un ressort, qui est approprié pour presser axialement contre l'échantillon de laboratoire et/ou contre des échantillons de laboratoire adjacents à l'échantillon de laboratoire à saisir lors de la prise de l'échantillon de laboratoire.

17. Dispositif selon la revendication 16, dans lequel la pince comprend un ressort d'éjection (50, 51) compressible, qui est disposé entre les doigts (31) et parallèlement à l'axe (S) et qui est approprié pour presser axialement contre l'échantillon de laboratoire lors de la prise de l'échantillon de laboratoire.

18. Dispositif selon l'une des revendications précédentes, dans lequel la pince comprend au moins un ressort de retenue (50) disposé radialement à l'extérieur des doigts (31), vu de l'axe (S), et compressible parallèlement à l'axe (S), qui est adapté pour presser axialement contre des échantillons de laboratoire adjacents à l'échantillon de laboratoire à saisir lors de la prise de l'échantillon de laboratoire.

19. Dispositif selon l'une des revendications précédentes, comprenant
une base fixe (1),
une table (2) mobile dans une première direction horizontale X par rapport à la base (1)
au moins un porte-échantillon supérieur (4a, 4c) et au moins un porte-échantillon inférieur (4b) qui sont disposés sur la table (2) et qui présentent chacun un agencement de positions de rangement pour recevoir des échantillons, le porte-échantillon supérieur (4a) étant disposé plus haut que le porte-échantillon inférieur (4b),
un élévateur (9) disposé à la base (1) avec un chariot (10) mobile verticalement,
un dispositif d'éjection (60) avec un plongeur (63) disposé sur le chariot (10) et mobile dans une deuxième direction horizontale Y,
un porte-échantillon intermédiaire (64) disposé en dessous et à distance du plongeur (63), qui est disposé entre les porte-échantillons supérieur et inférieur (4a, 4b) dans la direction Z et qui est couplé positivement à l'éjecteur dans la direction Y,
dans lequel un échantillon peut être poussé avec le plongeur (63) par le haut d'une première position de stockage dans le porte-échantillon supérieur (4a) dans le stockage intermédiaire d'échantillon (64), et du stockage intermédiaire d'échantillon (64) dans une deuxième position de stockage du porte-échantillon inférieur (4b).

20. Dispositif selon la revendication 19, dans lequel les porte-échantillons (4a, 4b) sont disposés latéralement et décalés les uns par rapport aux autres.

21. Dispositif selon l'une des revendications 19 ou 20, dans lequel le magasin d'échantillons intermédiaire (64) et le dispositif d'éjection (60) sont reliés par un guide vertical (67) de manière à pouvoir être déplacés verticalement l'un par rapport à l'autre, mais guidés positivement horizontalement.

22. Dispositif selon l'une des revendications 19 à 21, dans lequel un lecteur de marques (49) pour lire des marques sur des échantillons se trouvant dans le magasin intermédiaire d'échantillons (64) et/ou un détecteur de présence (49) pour détecter la présence d'un échantillon dans le magasin intermédiaire d'échantillons est disposé au magasin intermédiaire d'échantillons (64).

23. Dispositif selon l'une des revendications 19 à 22, comprenant au moins deux porte-échantillons supérieurs (4a, 4c).

24. Dispositif selon l'une des revendications 19 à 23, dans lequel le plongeur (63) se rétrécit vers une extrémité pour faciliter l'insertion du plongeur (63) dans une position de stockage.

25. Dispositif selon la revendication 24, dans lequel le plongeur (63) a quatre surfaces latérales (63a) à une extrémité, qui sont inclinées par rapport à un axe longitudinal du plongeur.

26. Dispositif selon l'une quelconque des revendications 19 à 25, dans lequel le plongeur est élastiquement déformable transversalement à un axe longitudinal du plongeur ou est monté élastiquement déformable transversalement à l'axe longitudinal.

27. Dispositif selon l'une des revendications 19 à 26, dans lequel au moins un moyen de ressort (50) est disposé sur le plongeur, qui peut être comprimé élastiquement lorsque le plongeur (63) est inséré dans une position de stockage pour retenir le porte-échantillon.
